(19) Europäisches Patentamt
European Patent Office
Office européen des brevets

(11) Veröffentlichungsnummer: **0 288 849 B1**

(12) # EUROPÄISCHE PATENTSCHRIFT

(45) Veröffentlichungstag der Patentschrift: **15.01.92**

(51) Int. Cl.$^5$: **C08K 3/02**, C08J 3/22, C08L 21/02, C08L 67/00, C08L 77/00

(21) Anmeldenummer: **88106105.5**

(22) Anmeldetag: **16.04.88**

(54) **Wässrige Elastomerzusammensetzung und deren Verwendung als Flammschutzmittel in Polyamiden und Polyestern.**

(30) Priorität: **24.04.87 DE 3713748**

(43) Veröffentlichungstag der Anmeldung:
**02.11.88 Patentblatt 88/44**

(45) Bekanntmachung des Hinweises auf die Patenterteilung:
**15.01.92 Patentblatt 92/03**

(84) Benannte Vertragsstaaten:
**BE DE FR GB NL**

(56) Entgegenhaltungen:
**FR-A- 2 262 098**
**GB-A- 1 458 194**

**CHEMICAL ABSTRACTS, Band 74, 1971, Seite 38, Zusammenfassung Nr. 112996p, Columbus, Ohio, US; & SA-A 70 00 200 (DUNLOP CO., LTD) 28-07-1970**

**CHEMICAL PATENTS INDEX, BASIC ABSTRACTS, Sektion A, Woche 8648, 28. Januar 1987, A0713, Nr. 86-316261/48, Derwent Publications Ltd, London, GB; & JP-A-61 235 442 (SUMITOMO ELEC. IND. K.K.) 20-10-1986**

(73) Patentinhaber: **BASF Aktiengesellschaft**
**Carl-Bosch-Strasse 38**
**W-6700 Ludwigshafen(DE)**

(72) Erfinder: **Plachetta, Christoph, Dr.**
**Albert-Einstein-Allee 12**
**W-6703 Limburgerhof(DE)**
Erfinder: **McKee, Graham Edmund, Dr.**
**Kastanienweg 8**
**W-6940 Weinheim(DE)**
Erfinder: **Weiss, Hans-Peter, Dr.**
**Pfalzring 75**
**W-6704 Mutterstadt(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 288 849 B1

## Beschreibung

Die Erfindung betrifft wäßrige Elastomerzusammensetzungen, enthaltend als wesentliche Komponenten

A) 5 - 75 Gew.% eines durch Emulsionspolymerisation hergestellten Elastomeren,

B) 10 - 70 Gew.% roten Phosphor,

C) 10 - 80 Gew.% Wasser und

D) 0,1 - 5 Gew.% Dispergiermittel.

Außerdem betrifft die Erfindung die Verwendung der erfindungsgemäßen wäßrigen Elastomerzusammensetzungen als Flammschutzmittel in Polyamiden und/oder Polyestern.

Die Verwendung von rotem Phosphor als Flammschutzmittel in Polyamiden und Polyestern ist seit langem bekannt. Die Einarbeitung von rotem Phosphor in Pulverform in die Polymerschmelze hat jedoch einige schwerwiegende Nachteile. Da dabei der Phosphor mit sehr heißen Oberflächen in Kontakt kommt, besteht die Gefahr von Phosphorbränden und Phosphorstaubexplosionen. Darüber hinaus sind Phosphorstäube als gesundheitsschädlich einzustufen.

Zur Verbesserung der Einarbeitung, insbesondere zur Verringerung des Staubens wurde vorgeschlagen, den roten Phosphor mit einem Polymeren zu beschichten und zu umhüllen. Hierfür werden in der GB-A 1 458 194 Styrol/Butadien-Copolymere und in der DE-A 26 25 691 Polymere mit einem Erweichungspunkt oberhalb 90 °C vorgeschlagen. Auch in der DE-A 32 15 750 wird ein Verfahren zur Brandschutzausrüstung von Polyamiden und Polyurethanen beschrieben, gemäß welchem der rote Phosphor in einem niedermolekularen Polyamid als Trägermaterial eingesetzt wird.

Alle diese Maßnahmen bringen zwar eine Verbesserung des Staubproblems mit sich, doch konnte die Gefahr von Phosphorbränden und Phosphorstaubexplosionen dadurch nicht vollständig beseitigt werden.

Aufgabe der vorliegenden Erfindung war es daher, roten Phosphor in einer Form zur Verfügung zu stellen, welche eine Einarbeitung in Polyamide oder Polyester ermöglicht, ohne daß die vorstehenden Probleme auftreten.

Erfindungsgemäß wird diese Aufgabe durch die eingangs definierten wäßrigen Elastomerzusammensetzungen gelöst.

Als Komponente A enthalten die erfindungsgemäßen Elastomerzusammensetzungen 5 - 75, vorzugsweise 15 - 60 und insbesondere 20 - 50 Gew.% eines durch Emulsionspolymerisation hergestellten Elastomeren.

Die Elastomeren können durch Emulsionspolymerisation in an sich bekannter Weise, wie sie z.B. in Houben-Weyl, Methoden der organischen Chemie, Band XII. I (1961) sowie bei Blackley in der Monographie "Emulsion Polymerization" beschrieben wird, hergestellt werden. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von diese Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0 °C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20 °C) am Aufbau des Elastomeren beteiligt, so werden diese im allgemeinen durch Polymerisation von Styrol, Acrylnitril, Methacrylnitril, $\alpha$-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel

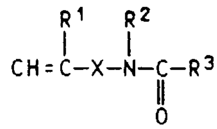

eingeführt werden können,
wobei die Substituenten folgende Bedeutung haben können:

- $R^1$ Wasserstoff oder eine $C_1$-$C_4$-Alkylgruppe,
- $R^2$ Wasserstoff, eine $C_1$-$C_8$-Alkylgruppe oder eine Arylgruppe, insbesondere Phenyl,
- $R^3$ Wasserstoff, eine $C_1$-$C_{10}$-Alkyl-, eine $C_6$-$C_{12}$-Arylgruppe oder -$OR^4$,
- $R^4$ eine $C_1$-$C_8$-Alkyl- oder $C_6$-$C_{12}$-Arylgruppe, die gegebenenfalls mit O- oder N-haltigen Gruppen substituiert sein können,
- X eine chemische Bindung, eine $C_1$-$C_{10}$-Alkylen- oder $C_6$-$C_{12}$-Arylengruppe oder

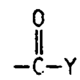

- Y O-Z- oder NH-Z und
- Z eine $C_1$-$C_{10}$-Alkylen- oder $C_6$-$C_{12}$-Arylengruppe.

Auch die in der EP-A 208 187 beschriebenen Pfropfmonomeren sind zur Einführung reaktiver Gruppen an der Oberfläche geeignet.

Beispiele für Monomere, mit denen die erwähnten funktionellen Gruppen eingeführt werden können sind Methacrylsäureglycidylester, Acrylsäureglycidylester, Allylglycidylether, Vinylglycidylether, Itaconsäureglycidylester, Acrylsäure, Methacrylsäure und ihre Metall-, insbesondere Alkalimetall- und Ammoniumsalze, Maleinsäure, Fumarsäure, Itaconsäure, Vinylbenzoesäure, Vinylphthalsäure, Monoester dieser Säuren mit Alkoholen ROH, wobei R bis zu 29 Kohlenstoffatome aufweist und z.B. eine Methyl-, Ethyl-, Propyl-, Isopropyl-, n-Butyl-, i-Butyl-, Hexyl-, Cyclohexyl-, Octyl-, 2-Ethylhexyl-, Decyl-, Stearyl-, Methoxyethyl-, Ethoxyethyl- oder Hydroxyethylgruppe darstellt. Maleinsäureanhydrid und Metallsalze (insbesondere Alkalimetall und Erdalkalimetallsalze) von polymerisierbaren Carbonsäuren sowie Ester von Acrylsäure oder Methacrylsäure mit tertiären Alkoholen, z.B. tert.-Butylacrylat weisen zwar keine freien Carboxylgruppen auf, kommen in ihrem Verhalten aber den freien Säuren nahe und werden deshalb als Monomere mit latenten Carboxylgruppen bezeichnet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentodienylacrylat sowie die in der EP-A 50 265 beschriebenen Verbindungen.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfnetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente A) bis zu 5

Gew.%, vorzugsweise nicht mehr als 3 Gew.%, bezogen auf A).

Nachfolgende seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| A | Buta-1,3-dien, Isopren, n-Butylacrylat, Ethylhexylacrylat oder deren Mischungen | Styrol, Acrylnitril, Methylmethacrylat |
| B | wie A aber unter Mitverwendung von Vernetzern | wie A |
| C | wie A oder B | n-Butylacrylat, Ethylacrylat, Methylacrylat, Buta-1,3-dien, Isopren, Ethylhexylacrylat |
| D | wie A oder B | wie A oder C aber unter Mitverwendung von Monomeren mit reaktiven Gruppen wie hierin beschrieben |
| E | Styrol, Acrylnitril, Methylmethacrylat oder deren Mischungen | erste Hülle aus Monomeren wie unter A und B für den Kern beschrieben<br>zweite Hülle wie unter A oder C für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere` Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Der Anteil des roten Phosphors (Komponente B) beträgt 10 - 70, vorzugsweise 20 - 70 und insbesondere 25 - 65 Gew.%, bezogen auf das Gesamtgewicht der wäßrigen Elastomerdispersion.

Der rote Phosphor kann direkt, wie er kommerziell erhältlich ist, eingesetzt werden. Es sind jedoch auch Produkte im Handel, in denen der rote Phosphor oberflächlich mit niedermolekularen flüssigen Substanzen wie Siliconöl, Paraffinöl oder Estern der Phthalsäure oder Adipinsäure oder Polymere oder Oligomeren beschichtet ist. Alle diese Produkte sind erfindungsgemäß einsetzbar.

Die mittlere Teilchengröße $d_{50}$ (Zahlenmittelwert) der in den Elastomerzusammensetzungen verteilten Phosphorpartikel liegt bevorzugt im Bereich von 0,0001 - 0,5, insbesondere von 0,001 bis 0,2 mm.

Als Komponente C enthalten die Zusammensetzungen 10 - 80, vorzugsweise 12 - 60 und besonders bevorzugt 15 - 55 Gew.% Wasser. Dieses rührt zum Teil oder vollständig aus der Herstellung der Elastomeren A) durch Emulsionspolymerisation her.

Die als Dispergierhilfsmittel in den wäßrigen Elastomerzusammensetzungen enthaltenen Substanzen sind an sich bekannt und in der Literatur beschrieben.

Hier seien nur Alkalimetall- und Ammoniumsalze von Alkyl-, Aryl-, Alkaryl- und Aralkylsulfonaten,

Sulfate, Polyethersulfate, Fettsäuren und Ethoxy-substituierte Fettsäuren oder deren Ester, Alkohole, Amine, Amide, Alkylphenole und Organophosphorsäuren bzw. deren Alkalimetall- oder Ammoniumsalze genannt, wie sie z.B. in der EP-A 82 020 aufgeführt sind.

Die Herstellung der wäßrigen Elastomerzusammensetzungen kann einfach dadurch erfolgen, daß man in die bei der Emulsionspolymerisation anfallende Dispersion in einer Mischvorrichtung, z.B. einem Rührkessel oder anderen für diesen Zweck bekannten Vorrichtungen den roten Phosphor einmischt. Dies wird in der Regel bei Temperaturen im Bereich von 10 - 70° C, vorzugsweise bei Raumtemperatur über einen Zeitraum von 10 min bis 5 h, vorzugsweise mindestens etwa 30 min durchgeführt. Die Dispergierhilfsmittel werden in der Regel bereits vor der Emulsionspolymerisation zugegeben, können jedoch auch teilweise vor der Zugabe des roten Phosphors zugesetzt werden.

Falls die bei der Emulsionspolymerisation anfallende Elastomerdispersion einen zu hohen oder zu niedrigen Wassergehalt aufweist, kann dieser entsprechend durch Abziehen oder Zugabe von Wasser auf den gewünschten Wert eingestellt werden.

Die auf diese Weise hergestellten erfindungsgemäßen wäßrigen Elastomerzusammensetzungen in Form von Suspensionen oder Dispersionen sind stabil, fließfähig und pumpbar. Die Phosphorteilchen setzen sich dabei nicht ab, wie dies z.B. bei der Phosphoreinmischung in Wasser zu beobachten ist. Dies ist bei der Verwendung der erfindungsgemäßen wäßrigen Elastomerzusammensetzungen als Flammschutzmittel in Polyamiden und/oder Polyestern ein wichtiges und wesentliches Kriterium.

Beispiel

Eine Dispersion eines Kern-Schalen-Polymerisats mit einem Kern aus n-Butylacrylat und Dihydrodicyclopentadienylacrylat (Gewichtsverhältnis 98:2) und einer Hülle aus n-Butylacrylat und Methacrylsäure (Gewichtsverhältnis 98,5:1,5) und einem Kern-Schalen-Gewichtsverhältnis von 60:40, welche durch Emulsionspolymerisation in an sich bekannter Weise hergestellt worden war, wurde in einem Rührkessel bei Raumtemperatur mit rotem Phosphor und dem Natriumsalz einer $C_{12}$-$C_{18}$-Alkansulfonsäure versetzt. Die Einmischzeit betrug 30 min.

Zusammensetzung der Elastomerdispersion:

52,3 Gew.% Elastomer
47,2 Gew.% Wasser
0,5 Gew.% Natriumsalz einer $C_{12}$-$C_{18}$-Alkansulfonsäure
47,2 g dieser Dispersion wurden mit 0,9 g des o.g. Emulgators und 51,9 g rotem Phosphor versetzt.

Es wurde eine stabile, fließfähige und pumpbare Dispersion folgender Zusammensetzung erhalten:
24,7 Gew.% Elastomer (A)
51,9 Gew.% Prot (B)
22,2 Gew.% Wasser (C)
1,2 Gew.% Emulgator (D)

## Patentansprüche

**1.** Wäßrige Elastomerzusammensetzungen, enthaltend als wesentliche Komponenten

A) 5 - 75 Gew.% eines durch Emulsionspolymerisation hergestellten Elastomeren,
B) 10 - 70 Gew.% roten Phosphor,
C) 10 - 80 Gew.% Wasser und
D) 0,1 - 5 Gew.% Dispergiermittel.

**2.** Wäßrige Elastomerzusammensetzungen nach Anspruch 1, gekennzeichnet durch folgende Gehalte

| | |
|---|---|
| 15 - 60 Gew.% | A), |
| 20 - 70 Gew.% | B), |
| 12 - 60 Gew.% | C) und |
| 0,1- 5 Gew.% | D). |

**3.** Verwendung der wäßrigen Elastomerzusammensetzungen gemäß den Ansprüchen 1 und 2 als Flammschutzmittel in Polyamiden und/oder Polyestern.

## Claims

**1.** An aqueous elastomer composition containing, as essential components,
A) 5 - 75% by weight of an elastomer prepared by emulsion polymerization,
B) 10 - 70% by weight of red phosphorus,
C) 10 - 80% by weight of water and
D) 0.1 - 5% by weight of a dispersant.

**2.** An aqueous elastomer composition as claimed in claim 1, containing
15 - 60% by weight of A),
20 - 70% by weight of B),
12 - 60% by weight of C) and
0.1 - 5% by weight of D).

**3.** The use of an aqueous elastomer composition as claimed in claim 1 or 2 as a flameproofing agent in polyamides and/or polyesters.

## Revendications

**1.** Compositions aqueuses d'élastomères, contenant, en tant que constituants essentiels,
A) de 5 à 75% en poids d'un élastomère preparé par polymérisation en émulsion,
B) de 10 à 70% en poids de phosphore rouge,
C) de 10 à 80% en poids d'eau et
D) de 0,1 à 5% en poids d'agent dispersant.

**2.** Compositions aqueuses d'élastomères selon la revendication 1, caractérisées par les teneurs suivantes:
15 à 60% en poids de A),
20 à 70% en poids de B),
12 à 60% en poids de C) et
0,1 à 5% en poids de D).

**3.** Utilisation des compositions aqueuses d'élastomères selon la revendication 1 ou 2 comme agents retardant les flammes dans des polyamides et/ou des polyesters.